# EUROPEAN PATENT APPLICATION

(11) **EP 4 134 764 A1**
(43) Date of publication of application: **15.02.2023**
(21) Application number: 21190481.8
(22) Date of filing: 10.08.2021
(51) Int. Cl.: G05B 19/418, H04L 41/084, H04L 41/08, H04L 67/12, H04L 67/00

(54) **A METHOD FOR CONFIGURING AN AUTOMATION DEVICE**

(71) Applicant: Siemens Aktiengesellschaft, 80333 München (DE)
(72) Inventor: Käbisch, Sebastian, 86163 Augsburg (DE)

(57) **Abstract**

The present embodiments relate to a method of configuring an automation device for onboarding within an automation system including the steps of:
a) loading at least one functionality model (STD) semantically representing interaction patterns to be offered or requested by the automation device (DVC),
b) loading at least one connectivity model (SCD) semantically representing communication and/or security constraints of the automation device (DVC);
c) implementing requirements of the connectivity model (SCD) within the functionality model (STD) to form a deployment model (VCD) by instantiating at least one interaction within at least one interaction pattern, whereby instantiating of the at least one interaction is at least dependent on one of said communication and/or security constraints of the automation device (DVC);
d) generating an instance of the deployment model (VCD) and storing the instance on the automation device (DVC).

## Description

### TECHNICAL FIELD

The disclosed embodiments relate to methods of configuring an automation device for onboarding an automation system.

### BACKGROUND

A system of physical objects that can be discovered, monitored, controlled or interacted with by electronic devices which communicate over various networking interfaces is commonly referred to as »Internet of Things«. According to the Internet of Things or IoT concept, devices or »Things« are connected to a web and they are autonomously able to extend or update their functionality by installing a piece of software.

The Internet of Things approaches are developed for enabling physical objects or Things to be part of the network or World Wide Web with the consequence that these Things are accessible over the network in a similar fashion as web pages are accessible on the World Wide Web today. Moreover, Things are designed to interact with each other using commonly known web standards.

In the industrial domain, specifically in the field of automation facilities, IoT techniques are believed to launch a visionary concept which is frequently referred to as »Industry 4.0«. Endeavours of introducing IoT techniques in the industrial domain field have coined the term IIoT or »Industrial Internet of Things«. The IoT paradigm influences a development of industrial automation facilities although they are inevitably more complex than general Things.

Hereinafter, an automation device is used to refer to an exemplary instance of industrial automation facilities. Such automation devices may be embodied as a physical device or component or, alternatively or additionally, by software or a software component, such as a service. Automation devices may have a special ability to offer or request services and to encapsulate resources within services. Such automation devices are similar in the property of being service-oriented autonomous control units, devices, actuators and/or sensors. Service computing and service orientation are therefore regarded not only as a form of communication but rather as a paradigm that should be assumed by the software entities by sharing their resources and expressing their requirements.

Such automation devices and related IIoT applications contribute toward a shortening of development times and a reduction in the interdependence of the components, so that adequate flexibility for automatic reconfiguration of production arrangements is achieved.

Onboarding - i.e., deployment of configuration data stored on the automation device for integrating the automation device in the automation system - of such automation devices, however, is still time-consuming and cumbersome. As an example, in many IIoT projects it is not uncommon that 50 % of the project costs are spent on integrating the data model and functionality of the various automation devices such as sensors and actuators. One of the reasons is that the various data models of the IIoT systems have to be understood and the protocol and security setup has to be implemented correctly.

Although a Thing Description - or abbreviated TD - as defined by the international standards organization World Wide Web Consortium or W3C would enable uniform both, human- and machine-readable representations of semantic descriptions for defining assets of automation devices, there are several intricacies in synchronizing the onboarding of an automation device and the cycle of defining a semantic description. Although desired functionalities and data model of an automation device may be known early, a specific communication and security setup only becomes apparent during the deployment phase, e.g., at the time of installation within an automation system of a customer.

Using a TD itself, however, does not alleviate the problems in synchronizing the onboarding of an automation device and the cycle of defining a semantic description. An important reason for the unsuitability of a TD is that the W3C standard rules a TD to mandatory include specific communication and security metadata TD. In an IIoT engineering process, however, specific communication and security metadata are only known in a later deployment phase, i.e., in a phase when the communication network and the desired security setup - e.g., specified by the customer - are in place. TDs on their own are therefore unsuitable for being used to support onboarding in a progressive development process.

In an attempt to resolve these restrictions, the W3C has issued a definition of a so-called Thing Description Template or TDT or - recently renamed - Thing Model. A Thing Model offers a kind of specifying a device class and general information - such as a data model and functionalities - along with communication metadata, which may not yet be fully known, and which can be added later. To date, however, no comprehensive concept is known as to how a valid Thing Model may be created independently and thereafter being converted to a specific TD instance of a valid TD - i.e., a machine-readable and machine-executable Thing Description or TD successfully validated to be in compliance with the W3C standard for Thing Descriptions - including the specific communication and security information.

Even worse, laborious rework is inevitable for providing all automation devices or other assets with specific communication and security procedures and/or configuration data. Rework may specifically mean a cumbersome process of copy and paste. This rework can be very inefficient if hundreds or thousands of sensors - as examples for automation devices - are to be onboarded in an automation system. In addition, a risk of errors is increased dramatically with increasing numbers of devices to be onboarded.

Thus, there is a need in the art of configuring an automation device for onboarding an automation system while unraveling the intricacies of currently known synchronization restrictions with a cycle of defining semantic descriptions.

Further on, there is a need for alleviating laborious rework for providing automation devices with specific communication and security procedures and/or configuration data.

Still further, there is a need in the art to benefit from a use of a template description representing one or more interactions to be offered or requested by the automation device, the template description being capable for automatic and device-individual adaption to communication and/or security constraints imposed by the automation system for each individual automation device.

### SUMMARY AND DESCRIPTION

The present embodiments relate to a method of configuring an automation device for onboarding an automation system, the method including the steps of:
a) loading at least one functionality model (STD) semantically representing interaction patterns to be offered or requested by the automation device (DVC),
b) loading at least one connectivity model (SCD) semantically representing communication and/or security constraints of the automation device (DVC);
c) implementing requirements of the connectivity model (SCD) within the functionality model (STD) to form a deployment model (VCD) by instantiating at least one interaction within at least one interaction pattern, whereby instantiating of the at least one interaction is at least dependent on one of said communication and/or security constraints of the automation device (DVC);
d) generating an instance of the deployment model (VCD) and storing the instance on the automation device (DVC).

In another embodiment, a configuration unit for configuring an automation device for onboarding an automation device is described, the composition unit including:
- a first interface (IF1) for loading at least one of a connectivity model (SCD) for semantically representing communication and/or security constraints of the automation device (DVC);
- a second interface (IF2) for loading at least one of a functionality model (STD) for semantically representing interaction patterns to be offered or requested by the automation device (DVC);
- a composition panel (CMP) for implementing requirements of the connectivity model (SCD) within the functionality model (STD) to form a deployment model (VCD) by instantiating at least one interaction within at least one interaction pattern, whereby instantiating of the at least one interaction is at least dependent on one of said communication and/or security constraints of the automation device (DVC);
- an onboarding panel (OBP) for generating an instance of the deployment model (VCD) and transmitting the instance (VCD) to a storage (MEM) of the automation device (DVC).

The embodiments allow for a development of the functionality model on the product side of the automation device being independent of a development of the connectivity model on an application side, e.g., on the site of the automation system. This independent or parallel development is big step forward compared to traditional onboarding procedures requiring laborious rework for providing automation devices with specific configuration data.

Laborious and cost-intensive reworking on the configuration and susceptibility to errors caused by copy & paste operations are advantageously omitted by applying a method according to the embodiments.

Due to the device-individual creation of a deployment model a semantic description is created which is precisely tailored to the automation device and the automation system.

According to the embodiments, interactions which are not conforming with communication and/or security constraints of the particular automation system will not be implemented, which has advantageous effects on the size of the deployment model.

The embodiments are built out of standardized and semantically described ingredients. Thus, they enhance interoperability.

Further embodiments are set out in the dependent claims.

According to an embodiment, the instantiation of the at least one interaction may include the act of parsing semantic expressions for indicating protocol-specific interactions within the at least one interaction pattern, wherein protocol-specific denotes specific for a communication protocol and/or a security protocol.

According to an embodiment, the instantiation of the at least one interaction may include the act of juxtaposing the protocol-specific interactions with communication and/or security constraints of the automation device, selecting at least one interaction to remain inside the interaction pattern and discarding at least one other interaction from the at least one interaction pattern.

According to an embodiment, the functionality model may semantically represent a data model used by the automation device for processing the interaction patterns.

According to an embodiment, interactions may include at least one of an action, a property and/or an event.

According to an embodiment, the functionality model may be a W3C Thing Model or a W3C Thing Description Template and the the connectivity model may be a W3C Thing Description. Although any semantic model - e.g. OPC-UA companion standard, iot.schema.org - and/or any standard - e.g. W3C WoT, MindSphere, OPC-UA - may be applied for practicing the embodiments, the W3C standards along the Thing Description have been proven to be suitable for industrial environments.

According to an embodiment, the loading of the at least one functionality model may be preceded by an act of providing a download source for the functionality model by a vendor of the automation device.

According to an embodiment, the loading of the at least one connectivity model may be preceded by an act of providing, by an operator of the automation device, a plurality of connectivity models.

According to an embodiment, each connectivity model may be adapted to communication and/or security constraints of the automation device.

According to an embodiment, the loading of the at least one connectivity model may be preceded by selecting one of said plurality of connectivity models according to a function, location and/or hierarchy of the automation device to be deployed within the automation device.

### BRIEF DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1: shows a block diagram of a method of configuring an automation device for onboarding an automation system according to an embodiment; and;
- FIG. 2: shows a graphical representation of a configuration unit for configuring an automation device for onboarding an automation device.

### DETAILED DESCRIPTION

Automation devices that are added, repaired, reconfigured or updated with respect to their software usually have to be configured before they are deployed in an automation system or in interaction with other automation devices. A deployment of automation devices, e.g., by configuring the configuration data stored on the automation device or for integration into the automation system is also referred to as onboarding.

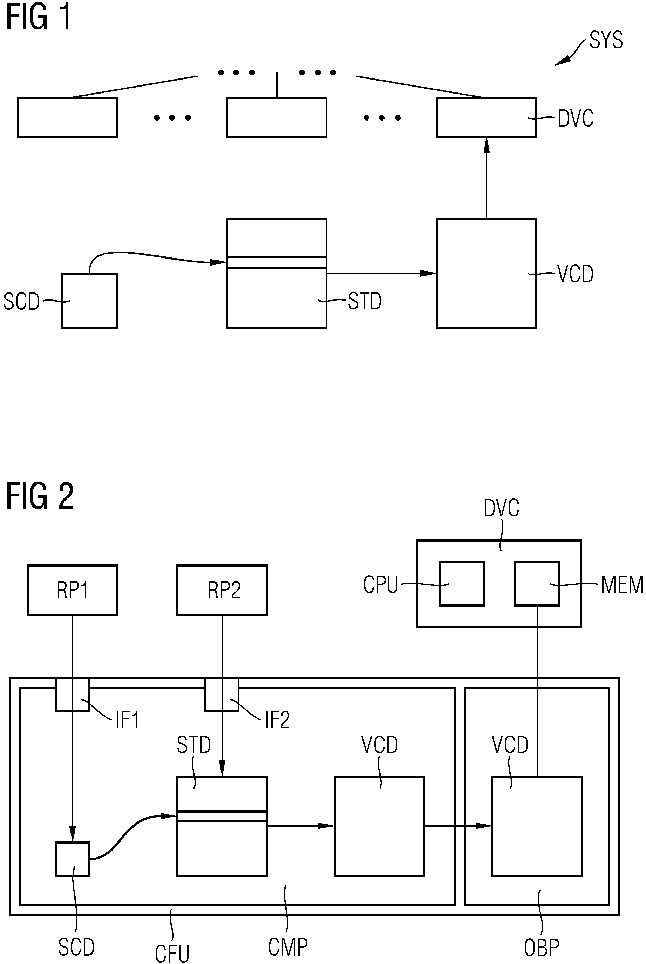

FIG. 1 shows an automation device DVC setup for onboarding an automation system SYS. The automation system SYS may consist of several automation devices, servers, modules, units, sensors, actuators, which are only partially indicated in the drawing.

In order to configure the automation device DVC for onboarding the automation system DVC, a functionality model STD is provided. This functionality model STD semantically represents interaction patterns to be offered or requested by the automation device DVC. In order to process, edit, amend or handle the functionality model STD, the functionality model STD is loaded, which may specifically mean that an instance of the functionality model STD is loaded into a working memory area, e.g., a working memory area of a configuration unit as shown further down in FIG. 2.

Further on, a connectivity model SCD is provided. This connectivity model SCD semantically represents communication and/or security constraints of the automation device DVC for onboarding the automation system SYS, whereby said constraints or configuration parameters of are to be in conformance with communication and/or security constraints imposed by the automation system SYS for each individual automation device DVC. In other words, the connectivity model SCD may be individual or customizable for each automation device DVC.

In order to process, edit, amend or handle the connectivity model SCD, the connectivity model SCD is loaded, which may specifically mean that an instance of the connectivity model SCD is loaded into a working memory area, e.g., a working memory area of a configuration unit as shown further down in FIG. 2.

In a following step, requirements of the connectivity model SCD are implemented within the functionality model STD as symbolized in the drawing by a curved arrow. A result of this implementation is a deployment model VCD. This deployment model VCD - or a copy or an instance of the deployment model VCD - is transferred to the automation device DVC, where the deployment model VCD or its instance is stored in a - not shown in FIG. 1 - memory area assigned to the automation device DVC.

The implementation of requirements or constraints of the connectivity model SCD within the functionality model STD is described in more detail below. In FIG. 1 a part of the connectivity model SCD is symbolized by a rectangular area within the depicted connectivity model SCD, whereby this part of the connectivity model SCD symbolized by the rectangular area is assumed to contain interaction patterns of the connectivity model SCD. In recognition of the semantic textual nature of the connectivity model SCD, this rectangular area containing interaction patterns could, as a first approximation, comprise a textual section for defining interaction patterns.

The implementation of requirements or constraints of the connectivity model SCD within the functionality model STD may now include an act of instantiating at least one interaction within at least one interaction pattern, whereby instantiating of the at least one interaction is at least dependent on one of said communication and/or security constraints of the automation device DVC.

More specifically, the act of instantiating may include parsing semantic expressions indicating protocol-specific interactions within the at least one interaction pattern. The term »protocol-specific« denotes specific for a protocol such as the communication and/or the security protocol. In a following step, these protocol-specific interactions are juxtaposed with communication and/or security constraints of the automation device DVC and determined by the connectivity model SCD. Consequently, as a result of the juxtaposition, at least one interaction is selected to remain inside the at least one interaction pattern and at least one other interaction is discarded or deleted from the at least one interaction pattern. In other words, some interactions inside an interaction patterns are retained while other interactions are deleted of the interaction pattern section. Eventually, the communication and/or security restrictions of the automation device DVC may be decisive as to which interactions are to be retained and which are not.

In the following, an example for demonstrating a method for configuring an automation device according to the embodiments is explained below. This uncomplex, however complete, example is explained using the W3C standard WoT Thing Description (Web of Things) which is retrievable by the URL https://www.w3.org/TR/wot-thing-description.

The exemplary automation device is assumed to be an IoT lamp which is capable of being controlled by at least one of two communication protocols, namely HTTP (Hypertext Transfer Protocol) and MQTT (Message Queuing Telemetry Transport). The exemplary automation device is intended to offer basic interactions such as an action, a property and/or an event.

Within the concept of IIoT or Industrial Internet of Things, functionalities and interactions of automation devices - which may be also referred to as »Things« in order to emphasize their digital nature - are semantically represented. Semantic representations of a Thing are called Interaction Patterns as one can interact with a Thing throughout them, i.e., to read a Property of a Thing, to trigger its Actions, or to consume an Event raised by the Thing.

For example, Thing Description (TD) proposed by the Web of Things (WoT) group of the World Wide Web Consortium (W3C) is a representation that can be used for this purpose. Thing Description provides a model for a device - including sensors, actuators, controllers etc. - in terms of its metadata and properties, as well as events raised by the device or actions that can be triggered by the device.

As to properties, the IoT lamp as an exemplary automation device is intended to offer a determination of its property »status«, wherein the status may be on or off. As to the actions, the exemplary automation device is intended to offer to switch its light on or off, wherein the action may be on or off.

In a first step, the functionality model STD is to be developed in a way that this functionality model STD is semantically representing the interaction patterns for the exemplary IoT lamp as outlined above.

The functionality model STD may be designed in any way as a machine-readable and human-readable text file as long as modelling aspects are clearly assigned, e.g., by using semantically unique names. In this example the functionality model STD is designed as W3C Thing Model, which was formerly known as »Thing Description Template« as shown below:

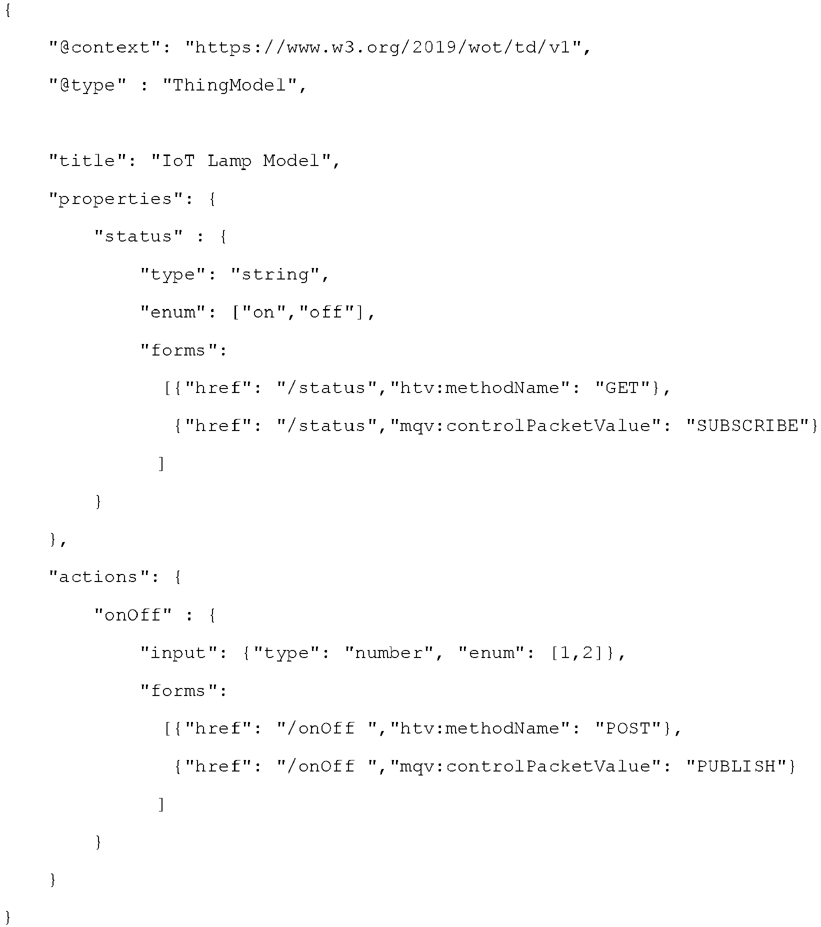

The first two code lines associated with the expressions @context and @type determine the character of the semantic description above, namely being a Thing Description and, more specifically, being a Thing Model.

In the adjoining sections, the title »IoT Lamp Model« is specified along with specifications of the properties that may be queried from the IoT lamp and actions that may be executed by the IoT lamp. No events are defined in this simple specification of an exemplary IoT lamp.

The properties section specifies one single property entitled »status« with two possible status values »on« or »off«, both defined as a character string. An interaction pattern: 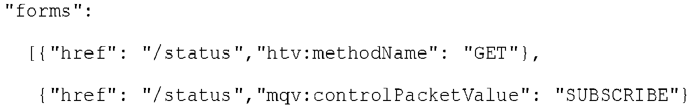 defines two possible interactions - here: two possible requests for retrieving the single property »status« in this example - offered by the IoT lamp, wherein the property may be either requested by a HTTP-request »GET« and/or by a MQTT-request »SUBSRIBE« as defined in the line below. The HTTP-request »GET« is preceded by a definition »htv:methodName« ruling that the request »method Name« should be initiated by a HTTP protocol, as expressed by the expression »htv« or unabbreviated: »HTTP vocabulary«. The MQTT-request »SUBSCRIBE« is preceded by a definition »mqv:controlPacketValue« ruling that the request »controlPacketValue« should be initiated by an MQTT protocol, as expressed by the expression »mqv« or unabbreviated: »MQTT vocabulary«.

A further interaction pattern: 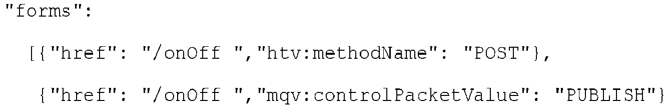 defines two possible interactions - here: two actions - offered by the IoT lamp, wherein the action »onOff« may be either executed by a HTTP-request »POST« and/or by a MQTT-request »PUBLISH« as defined in the line below. The HTTP-request »POST« is preceded by a definition »htv:methodName« ruling that the action »method Name« should be initiated by a HTTP protocol, as expressed by the expression »htv« or unabbreviated: »HTTP vocabulary«. The MQTT-request »PUBLISH« is preceded by a definition »mqv:controlPacketValue« ruling that the action »controlPacketValue« should be initiated by an MQTT protocol, as expressed by the expression »mqv« or unabbreviated: »MQTT vocabulary«.

In a second step, the connectivity model SCD is to be developed for semantically representing communication and/or security constraints of the exemplary IoT lamp when onboarded in an automation system.

In the exemplary target automation system, a communication scheme solely using the protocol MQTT is desired. It is further desired to use a simple authentication along with a basic security scheme presenting a username and a password as credentials. The following connectivity model SCD - which is designed as W3C Thing Description or TD - specifies the communication and security setup:

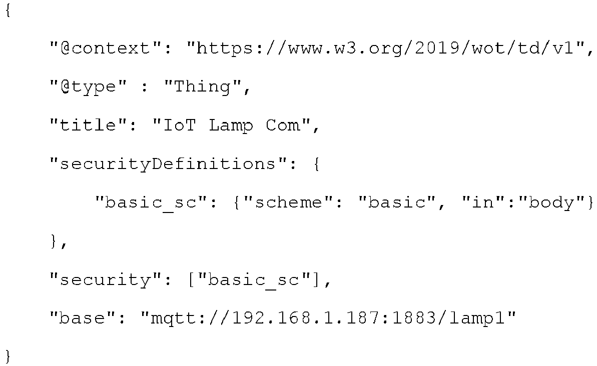

The first two code lines associated with the expressions @context and @type determine the character of the semantic description above, namely being a Thing Description and, more specifically, being a Thing.

In the adjoining sections, the title »IoT Lamp Com« is specified along with basic security specifications. The last line starting with »"base":« instructs the communication protocol in the exemplary target automation system to be MQTT wherein the communication is to be conducted using the IP address 192.168.1.187, the port number 1883 and an MQTT topic name »lamp1«.

In other words, the connectivity model shown above constrains the intended communication IoT lamp to a usage of MQTT thereby excluding - or at least: making unnecessary - the usage of the communication protocol HTTP. Similarly, the connectivity model shown above constrains the intended security measures of the IoT lamp to a usage of simple authentication thereby excluding the usage of alternative credentials or security options.

In a third step, the deployment model VCD is created automatically using a method according to the embodiments. The functionality model STD which was designed, provided or loaded in the first step will be now amended using the connectivity model SCD which was designed, provided or loaded in the second step.

In this current third step, requirements of the connectivity model SCD will be implemented within the functionality model STD to automatically form the deployment model VCD according to the proposed methods. In the following, a possible outcome of an automatic creation of this deployment model VCD according to the embodiments is shown:

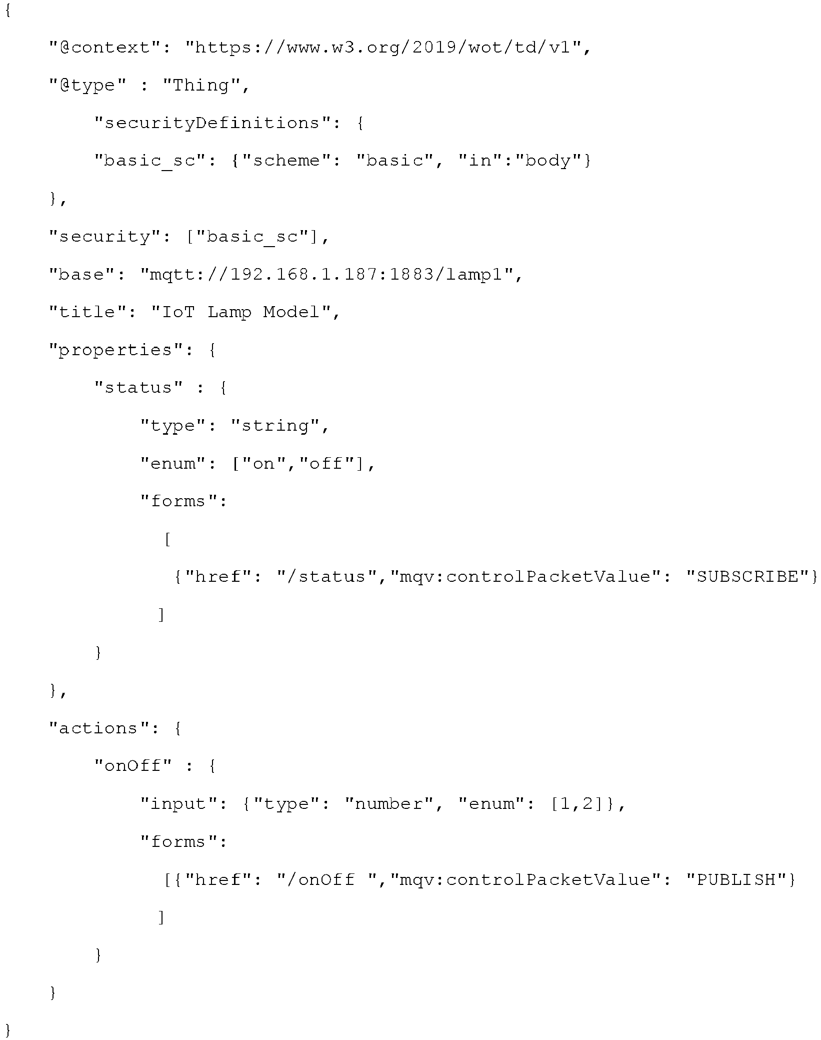

The first two code lines associated with the expressions @context and @type determine the character of the semantic description above, namely being a Thing Description and, more specifically, being a Thing described by a valid Thing Description - i.e., a machine-readable and machine-executable Thing Description or TD successfully validated to be in compliance with the W3C standard for Thing Descriptions - including the specific communication and security information.

In the adjoining sections, the title »IoT Lamp Com« is specified along with security specifications. The last line starting with »"base":« instructs the communication protocol in the exemplary target automation system to be MQTT wherein the communication is to be conducted using the IP address 192.168.1.187, the port number 1883 and an MQTT topic »lamp1«.

One main aspect of this third step is the instantiation of at least one interaction which is dependent on communication constraints - the exemplary target automation system requires an implementation using MQTT - and security constraints - the exemplary target automation system requires simple authentication in a basic security scheme using a username and a password as credentials - of the exemplary IoT lamp when onboarded in the target automation system.

The functionality model STD may thereby be amended in such a way that metadata may be removed from the functionality model STD which is not relevant for the specific application of the automation device DVC, here, the exemplary IoT lamp. In the exemplary IoT lamp this is the case with the http-part.

The former interaction pattern of the functionality model: 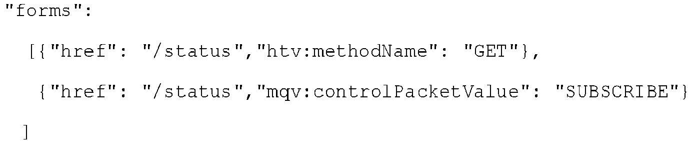 is now, in the deployment model, instantiated to an interaction pattern containing a sole interaction - an MQTT query method SUBSCRIBE - which was retained because of said communication protocol constraints to be imposed to the exemplary IoT lamp due to communication protocol requirements of the automation system, while the HTTP method GET was discarded:

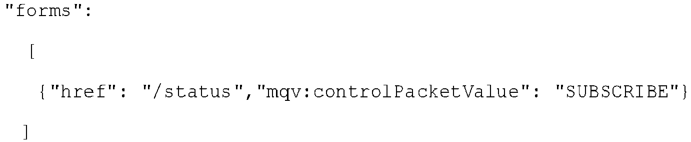

Similarly, a further interaction pattern of the functionality model: 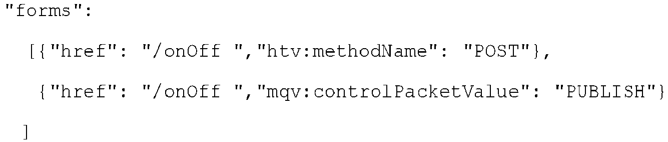 is now, in the deployment model, instantiated to an interaction pattern - an MQTT action PUBLISH - containing a sole interaction which was retained because of said communication protocol constraints to be imposed to the exemplary IoT lamp due to communication protocol requirements of the automation system:

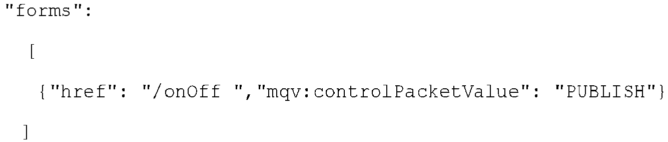

Furthermore, the formation of the deployment model VCD may include - among the act of instantiating at least one interaction within at least one interaction pattern - an act of transferring communication metadata and security metadata from the connectivity model SCD to the functionality model STD. This can be seen by the additional lines 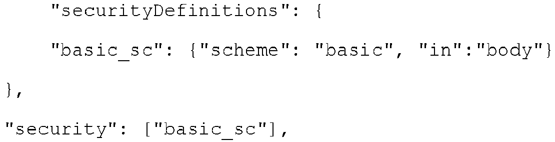 in the deployment model VCD.

The deployment model VCD is created in the form of a valid Thing Description or TD. Such a Thing Description is deployable into a memory of the automation device - here, the exemplary IoT lamp - where the Thing Description of the deployment model VCD may be readily executed in a corresponding runtime environment. Such runtime environments are well known in the art and may be chosen at any discretion of one skilled in the art. Accordingly, further explanations are deemed unnecessary for the purpose of describing the proposed embodiments herein.

FIG. 2 shows a possible graphical user interface - also referred to as composition panel CMP - of a configuration unit CFU according to the embodiments. The composition panel CMP visualizes a selection and composition of the connectivity model SCD and the functionality model STD.

A further optional onboarding panel OBP may include a further graphical user interface as shown in the drawing for displaying a progress and/or a status in a generation of an instance of the deployment model VCD. The onboarding panel OBP may further support transmitting the instance of the deployment model VCD to a storage MEM and/or a processor CPU of the automation device DVC.

A first interface IF1 of the configuration unit CFU is operated to load at least one of a connectivity model SCD from a first repository RP1. The first repository RP1 may be located inside or outside the configuration unit CFU. In the latter case - as shown in the drawing - the first interface IF1 may be a network interface for setting up a session with the first repository RP1 over a - not shown - packet-oriented network.

A second interface IF2 of the configuration unit CFU is operated to load at least one functionality model STD from a second repository RP2. The second repository RP2 may be located inside or outside the configuration unit CFU. In the latter case - as shown in the drawing - the second interface IF2 may be a network interface for setting up a session with the second repository RP2 over the packet-oriented network.

The semantic representation as used by the embodiments provide the following advantages:
- A machine interpretable user interface of the configuration unit allows for an interpretation of semantic components such that the configuration unit may automate or at least assist complex deployment tasks;
- Graphically represented semantic medals enable non-semantic experts to easily configure semantics of an automation device, eventually automating the process of generating a semantic description of the automation device;
- Onboarding engineers may easily onboard or migrate in-teroperable automation devices without binding them to particular automation systems;
- The embodiments can be applied to any semantic model (OPC-UA companion standard, iot.schema.org etc.), any standard (W3C WoT, MindSphere, OPC-UA), any device (industrial devices, building automation devices etc.), any backend, format etc.
- The embodiments can be integrated in any existing IoT tool or engineering tool e.g., TIA portal, Node-RED, Mendix, MindSphere, 4diac etc.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method of configuring an automation device for onboarding an automation system, the method including the steps of:
a) loading at least one functionality model (STD) semantically representing interaction patterns to be offered or requested by the automation device (DVC),
b) loading at least one connectivity model (SCD) semantically representing communication and/or security constraints of the automation device (DVC);
c) implementing requirements of the connectivity model (SCD) within the functionality model (STD) to form a deployment model (VCD) by instantiating at least one interaction within at least one interaction pattern, whereby instantiating of the at least one interaction is at least dependent on one of said communication and/or security constraints of the automation device (DVC);
d) generating an instance of the deployment model (VCD) and storing the instance on the automation device (DVC).

2. The method according to claim 1, wherein instantiating of the at least one interaction includes the acts of:
- parsing semantic expressions for indicating protocol-specific interactions within the at least one interaction pattern, wherein protocol-specific denotes specific for a communication protocol and/or a security protocol; and;
- juxtaposing the protocol-specific interactions with communication and/or security constraints of the automation device (DVC), selecting at least one interaction to remain inside the interaction pattern and discarding at least one other interaction from the at least one interaction pattern.

3. The method according to one of the preceding claims, the functionality model (STD) semantically representing a data model used by the automation device (DVC) for processing the interaction patterns.

4. The method according to one of the preceding claims, wherein said interactions include at least one of an action, a property and/or an event.

5. The method according to one of the preceding claims, wherein the functionality model (STD) is a W3C Thing Model or a W3C Thing Description Template.

6. The method according to one of the preceding claims, wherein the connectivity model (SCD) is a W3C Thing Description.

7. The method according to one of the preceding claims, wherein loading at least one functionality model (STD) is preceded by an act of providing a download source for the functionality model (STD) by a vendor of the automation device (DVC).

8. The method according to one of the preceding claims, wherein loading at least one connectivity model (SCD) is preceded by an act of providing, by an operator of the automation device (DVC), a plurality of connectivity models (SCD), each adapted to communication and/or security constraints of the automation device (DVC), and selecting one of said connectivity models (SCD) according to a function, location and/or hierarchy of the automation device (DVC) to be deployed within the automation device (DVC).

9. A configuration unit for configuring an automation device for onboarding an automation device, the configuration unit (CFU) including:
- a first interface (IF1) for loading at least one of a connectivity model (SCD) for semantically representing communication and/or security constraints of the automation device (DVC);
- a second interface (IF2) for loading at least one of a functionality model (STD) for semantically representing interaction patterns to be offered or requested by the automation device (DVC);
- a composition panel (CMP) for implementing requirements of the connectivity model (SCD) within the functionality model (STD) to form a deployment model (VCD) by instantiating at least one interaction within at least one interaction pattern, whereby instantiating of the at least one interaction is at least dependent on one of said communication and/or security constraints of the automation device (DVC);
- an onboarding panel (OBP) for generating an instance of the deployment model (VCD) and transmitting the instance (VCD) to a storage (MEM) of the automation device (DVC).
